Europäisches Patentamt

European Patent Office

Office européen des brevets

(19)

(11) Publication number: **0 248 092**
**B1**

## EUROPEAN PATENT SPECIFICATION

(12)

(45) Date of publication of the patent specification:
14.02.90

(51) Int. Cl.⁴: **G11B 5/60, G11B 5/455**

(21) Application number: **86104599.5**

(22) Date of filing: **04.04.86**

(54) Method for monitoring the performance of the head-disc-interface and device for preventing data losses due to magnetic head-disc-interferences.

(43) Date of publication of application:
**09.12.87 Bulletin 87/50**

(45) Publication of the grant of the patent:
**14.02.90 Bulletin 90/7**

(84) Designated Contracting States:
**DE FR GB IT**

(56) References cited:
**EP-A- 0 105 094**

**PATENTS ABSTRACTS OF JAPAN, vol. 6,
no. 137 (P-130)[1015], 24th July 1982; &
JP-A-57 60 566 (FUJITSU K.K.) 12-04-1982
PATENTS ABSTRACTS OF JAPAN, vol. 8,
no. 82 (P-268)[1519], 14th April 1984; &
JP-A-58 224 469 (FUJITSU K.K.) 26-12-1983**

(73) Proprietor: **IBM DEUTSCHLAND GMBH,
Pascalstrasse 100, D-7000 Stuttgart 80(DE)**

(84) Designated Contracting States: **DE**

(73) Proprietor: **International Business Machines
Corporation, Old Orchard Road, Armonk, N.Y. 10504(US)**

(84) Designated Contracting States: **FR GB IT**

(72) Inventor: **Mehrens, Jens Detlef, Dipl.-Ing., An der
schwarzen Hecke 82, D-6501 Ober-Olm(DE)**
Inventor: **Ertingshausen, Friedrich, Königsberger
Strasse 92, D-6501 Nieder-Olm(DE)**

(74) Representative: **Herzog, Friedrich Joachim, Dipl.-Ing.,
IBM Deutschland GmbH Schönaicher Strasse 220,
D-7030 Böblingen(DE)**

ACTORUM AG

## Description

The present invention generally relates to magnetic disc storage technology and, more particularly, to a method for monitoring the performance of the interface of a head/slider combination and a magnetic disc, especially a magnetic disc storage system, in which a triboelectric current upon rubbing contact between slider and disc surface is generated. The present invention also pertains to a device for preventing data losses due to head-slider/disc interferences in magnetic disc storage systems in which a triboelectric current is observed.

In magnetic disc storage systems the interface between the combination consisting of the magnetic transducer head and the slider and the surface of the magnetic disc is of great importance. As the slider carries the head and contains air bearing surfaces and slides during normal disc operation on an extremely thin air cushion over the disc surface, the possibility of interferences between head and disc, so-called head disc interferences HDI where the head touches the surface of the disc, cannot be excluded. So HDIs are very detrimental both to the slider and its suspension and also to the surface of the disc. This can lead to irreversible damages to the surface of the disc and to the head-slider combination. In both cases irreversible data losses are possible and to be feared.

In accordance with the applicant's European Patent Application EP-A 203 207 (published after the priority date of the present application) it is described that there exist magnetic storage systems in which a triboelectric current can be observed between the head/slider combination on one side and the surface of the magnetic disc on the other side in case of rubbing contact between these two interface partners. Said application describes a method for measuring and testing the properties of the interface of a slider carrying a magnetic transducer head and a disc in a magnetic disc storage apparatus which is characterized by adjusting the rotational speed of the disc such that there is a rubbing contact between the slider and the disc, in that the thus generated triboelectric current between disc and slider is measured during a measuring/testing period, and in that the amplitude curve of this triboelectric current is analyzed over a time period.

This known method deals predominantly with the testing of the disc/slider interface and the lifetime testing of magnetic head sliders and/or magnetic disc respectively. This method does not deal with the question of monitoring the performance of the head/slider combination in cooperation with the disc surface in a magnetic disc storage system, especially under the aspect of avoiding data losses due to upcoming head crashes and disc surface destroying events.

Furthermore in accordance with applicant's European Patent Application EP-A 0 105 094 a method for monitoring the flight of a magnetic transducer head is known. In accordance with this application intermittent contacts between a flying transducer head and a magnetic record medium are monitored by detecting triboelectric charges generated by such contacts. Different amounts and polarities of triboelectric charge are generated by different materials on the surface of the record medium. Furthermore the flight of the head when it is out of contact with the record medium can be monitored by detecting variations in the displacement current generated as the head flies over the record medium. This known method is used to test an assembled disc file to determine the amount of contact between the rotating discs and the associated slider assemblies. And it may also be used to remove any disc which appeared to result in excessive contact with slider assembly.

As stated in this patent application, detection of both the triboelectric charges generated by contacts between the disc surface and the modulation produced by variations in the spacing between the slider and the disc provides continuous monitoring of both the occurance and severity of such contacts and variations in the spacing when the slider and disc are not in contact.

This known method deals exclusively with monitoring the triboelectric current or triboelectric charge during the normal operation of a disc system that means when the disc rotates with operational speed. Nothing is stated about the problems involved with start procedures. Furthermore this known prior art does not contain any indication of how data losses could be prevented, what kind of criteria should be applied for preventing those losses and how such action should be initiated and under what circumstances or conditions respectively.

It is therefore the object of the present invention to provide a method for preventing irreversible data losses in magnetic storage systems due to head/disc interferences such as head crashes and disc surface defects. This method should be able to save the stored data before the storage system is actually destroyed and actual data losses did occur.

It is another object to provide a device for preventing data losses due to head/slider disc interferences in magnetic disc storage systems in which a triboelectric current is observed to exist between the slider and the disc surface upon rubbing contact between them when in relative motion to each other.

The invention as laid down in the method and device claims 1 and 6 achieves these objects in advantageous manner. The invention gives the possibility to avoid irreversible data losses of magnetic disc storage systems by monitoring, measuring and analysing the triboelectric current, and based on the analysing results initiating a data transfer shortly before the end of the lifetime of said data storage system. Thus it can be avoided to lose valuable data irreversibly and on the other hand to discard a data storage system earlier than absolutely necessary.

In the following description of a preferred embodiment of the present invention, the latter is described by means of an example shown in the accompanied drawing in which

Fig. 1 schematically shows a magnetic disc storage system incorporating the present invention;

Fig. 2 shows schematically with more detail a slider to which a triboelectric current measuring and indicating device is connected;

Fig. 3 schematically a plot of the maximum amplitude of the triboelectric current dependent on the lifetime of a disc or a disc storage system respectively;

Fig. 4 schematically a plot of the triboelectric current dependent upon disc speed during startup phase;

Fig. 5 schematically a plot of the triboelectric current dependent on the disc speed, with debris collection on headrails during startup phase and

Fig. 6 schematically a plot of the triboelectric current during startup phase independently of the disc speed for the case of current direction change.

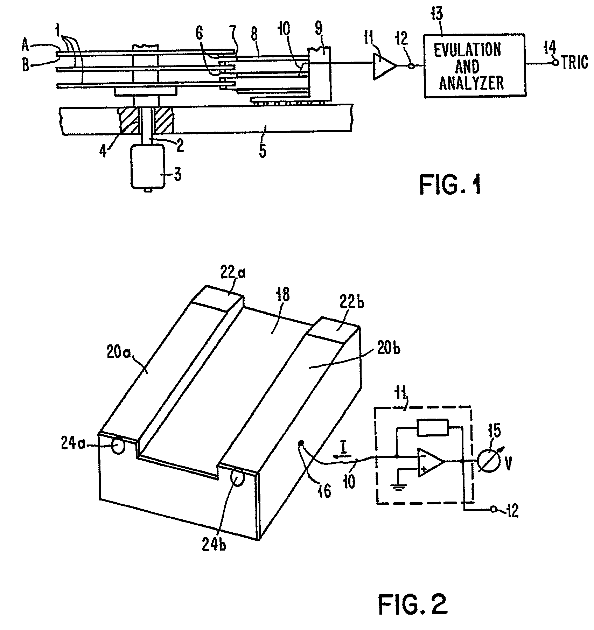

With reference to Fig. 1 and 2 a set-up in accordance with the invention is schematically depicted. This set-up makes it possible to perform the method in accordance with the present invention. Fig. 1 shows magnetic discs 1 with two coated sides A and B out of a disc pack that is not completely shown. These discs 1 are mounted on a spindle 2, driven by a motor 3. A spindle bearing 4 is contained in a housing 5. With respect to side A of the lowermost disc 1 a slider 6 containing a magnetic head (not shown) is mounted on a suspension 7 and flies over or on the disc respectively upon rotation. Suspension 7 is mounted on an arm 8 which electrically isolated is fixed to a carriage 9 movable on housing 5. An electric connection 10 feeds the measured triboelectric current from slider 6 over suspension 7 and arm 8 into an operational amplifier 11. To the output 12 of amplifier 11 an evaluation and analyser circuit 13 is connected. This evaluation and analyser circuit 13 allows to evaluate and analyse the measured triboelectric current and in accordance with the present invention gives a saving signal TRIC at its output 14 under circumstances that are described below.

Fig. 2 shows details of a slider construction in accordance with, for example, US Patent 4 218 715. Slider 18 has two rails 20a and 20b, so-called air bearing surfaces, and is sliding by means of an air bearing over disc surface at an operational speed of approximately 3600 rpm. As is customary, the rails 20a and 20b each start at their leading portion with respect to a moving track of the rotating disc, with a tapered section 22a and 22b respectively. At the trailing edge of the slider and at the trailing part of the rails 20a and 20b two thin film magnetic transducer heads 24a and 24b are mounted. In accordance with the invention electric connection 10 is connected at point 16 to the body of slider 18. On the other side connection 10 is connected to amplifier 11 that has its output 12 leading to evaluation and analysing circuit 13. Furthermore there might be provided a volt meter 15 to indicate the value of the triboelectric current I flowing between slider 18 and disc surface A of disc 1.

As can be seen from Fig. 1 only one slider is connected to evaluation and analysing circuit 13. This is sufficient for a complete disc package for the purpose of the present invention. That means that only one head suspension has to be mounted electrically isolated so that triboelectric current I can be measured by a connection fixed to the slider body of one single head.

This slider 6 in Fig. 1 together with its suspension 7 mounted on arm 8 is moved together with carriage 9 and all other heads in parallel to position the heads over the desired disc tracks.

The phenomena of triboelectric current flowing between a slider and a magnetic disc surface upon rubbing contact between both has been observed in a system that comprises a ceramic mixture of aluminium oxide ($Al_2O_3$) and titan carbide (TiC) for the slider. The inclusion of titan carbide renders slider 6 sufficiently conductive to allow conduction of the triboelectric current.

The magnetic disc used in that system consists of an aluminium magnesium alloy substrate coated with iron oxide ($Fe_2O_3$) and aluminium oxide ($Al_2O_3$) particles dispersed in an epoxy recipient.

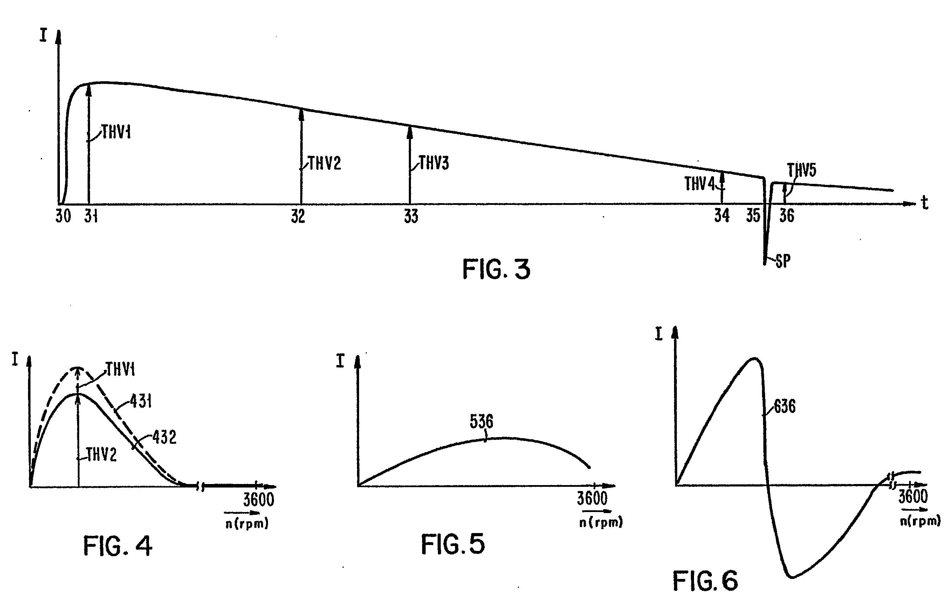

Fig. 3 shows schematically in a qualitative manner the triboelectric current I over the expected lifetime t of a disc or a disc storage system respectively. As described in the European Patent Application EP 85 105 722.4 of applicant's the triboelectric current I is very much dependent on changes in the disc/slider interface, on the disc surface, on the slider surface and on the lube quantity, quality and distribution. To obtain an indication of lifetime of the disc/slider assembly to be expected, slider 6 as shown in Fig 1 is first run-in (conditioned), for example on a first track, and then positioned on another track. In the presence of good sliding properties the triboelectric current I is measured during a testing time in total which is characteristically shown in Fig. 3. In the very beginning of the lifetime triboelectric current I around point 30 is about zero and then increases within for example 15 minutes after the start of the test to a maximum threshold value THV1 at point 31. Then afterwards the amplitude of the triboelectric current decreases slowly. The estimated lifetime can be defined for instance, by the time when the triboelectric current has decayed to a certain percentage of its maximum value. This might be for example 25% or 10% of the value THV1.

In Fig. 3 there are shown further threshold values beside the maximum threshold value THV1 at timepoint 31, which might be reached after 15 minutes of rubbing test run. At timepoint 32 threshold value THV2 is reached and at timepoint 33 a still smaller threshold value THV3. Also a further smaller threshold value THV4 is reached at timepoint 34. At timepoint 35 a spike SP is shown showing a special phenomena in that the triboelectric current I becomes negative, that means that the flow of the triboelectric current reverses direction. Afterwards at timepoint 36 a threshold value THV5 is reached. Again this value is on the positive side of the value for the triboelectric current I.

The curve of Fig. 3 can be measured by extensive tests for example in a measuring time period of 8 hours continuous rubbing contact between slider and disc. The height of maximum of the triboelectric current depends on the rotational speed and on the quantity and quality of the lube distributed over the disc. To obtain the triboelectric current, there must be a frictional, i.e. rubbing contact between disc and slider. For this purpose a rotational speed of 100 and 500 rpm is chosen which results in a flying height of 0-100 nm. Under these set conditions the curve of Fig. 3 can be measured. The result of this measurement for example might be stored in the evaluation and analysing circuit 13 shown in Fig.1 for purposes to be described. In normal operation of a disc storage system such a curve as shown in Fig. 3 cannot be measured.

In normal operation of a magnetic disc storage system that is provided with the set-up shown in Fig. 1 and 2 upon each start phase of the disc storage and during operation the triboelectric current I can be measured and observed.

When the magnetic disc storage system is not in use the discs do not rotate around its spindle and the magnetic heads are resting on a certain start/stop area of the disc. Upon each start of the magnetic disc storage system the discs are accelerated from 0 rotational speed to a final rotational speed, the so-called operational speed of about 3600 rpm. During a rotational speed up to about 600 rpm the slider and the disc are in rubbing contact. Above that speed up to about 1200 rpm the slider starts to take off from the disc surface and only some occasional rubbing contact is observed.

Fig. 4 describes for a conditioned track the curves for the triboelectric current I during such a start phase just described. Over the rotational speed n measured in revolutions per minute rpm the triboelectric current I is depicted. Curve 431 corresponds to the point 31 in lifetime curve of Fig. 3 and has a threshold value THV1 that is the maximum threshold value and corresponds to threshold value THV1 of Fig. 3. As curve 431 shows the triboelectric current increases dependent on the rotational speed with increasing speed to the shown maximum value THV1 and then afterwards decreases with increasing rotational speed. At an operational speed of about 3600 rpm the triboelectric current I is 0. It also has to be 0 then because at that operational speed there should be no contact between slider and disc and therefore there should be no triboelectric current present.

Fig. 4 shows with curve 432 another example for the behaviour and value of the triboelectric current I during another start phase and during another timepoint in lifetime of the disc storage system. This lifetime might be point 32 of Fig. 3 and the maximum amplitude for the triboelectric current I at that point in time corresponds to threshold value THV2.

In accordance with one embodiment of the present invention this start-up phase observation shown in Fig. 4 reveals the fact if the triboelectric current I during start phase reaches a certain threshold value. Comparing the maximum threshold value of triboelectric current I against a preset minimum threshold value THVmin gives the possibility to initiate a saving action for the stored data before an irreversible data loss occurs. The minimum threshold value THVmin might be preset in accordance with tests for the lifetime of a disc storage system of comparable kind as well as with values that have been found to be representative for the longest possible lifetime in connection with the minimal allowable maximum threshold value for the triboelectric current I during start phase. This is one event against which the triboelectric current I is measured, analysed and compared. If this comparison shows that the maximum value reached for the triboelectric current I during a specific start phase is smaller than the preset minimum threshold value, then at the output 14 of the evaluation and analyser circuit 13 of Fig. 1 the saving signal TRIC is generated. This signal TRIC is usable to initiate a data saving procedure, either automatically or by intervention of the operator of the system.

In connection with Fig. 5 there is described another event which in connection with another embodiment of the present invention is used to generate the saving signal TRIC. If there is a massive accumulation of debris at the rails of the slider, there might be a constant contact between this slider and the disc surface even at operational speed of 3600 rpm. In this case triboelectric current I is flowing and can be measured. That means as shown with curve 536 in Fig. 5 current I does not become 0 at operational speed of 3600 rpm. That means that the triboelectric current does not disappear at operational speed and in the start phase has not diminished toward 0. This is a clear indication that there is contact between slider and disc during operation of the disc storage. That also means furtheron that at operational speed on the disc surface a rubbing slider most probably destroys the disc surface underneath it. This is a further event for initiating the saving action by generating the saving signal TRIC at output 14 of evaluation and analyser circuit 13.

In connection with Fig. 6 a further possible event in observing the triboelectric current during start-up phases is shown. The triboelectric current I is monitored during each start phase if it accepts a negative value, that means if it becomes less than 0 or in other words does flow in a direction opposite to the usually observed current flow direction. This especially might occur at a timepoint 36 shown in Fig. 3 and is depicted with curve 636 in Fig. 6, showing first a positive value and afterwards a negative value for the current I during the start phase. In any case this is also an event which is monitored, and if observed triggers the generation of the saving signal TRIC at output 14 of evaluation and analysing circuit 13.

This evaluation and analysing circuit 13 can also be used to evaluate a fourth event. This fourth possible event is observing the behaviour of the triboelectric current and monitoring the same during the total operation of the disc storage system. If at any point in time during normal operation a triboelectric current occurs this hints at a contact between disc and slider. If those head-disc-interferences occur the danger for irreversible data losses due to destroyed disc surface areas is to be expected. Therefore it is advisable also in those cases to initiate a data saving action. This is possible by generating also in this case the saving signal TRIC.

The present invention by its method and its device presents the advantage that at different events a saving operation can be initiated before irreversible data losses due to head-disc-interferences occur. By measuring, monitoring, evaluating and analysing the triboelectric current that flows under certain circumstances between a magnetic head slider and the disc surface, a saving action can be initiated to prevent irreversible losses of data stored on the monitored magnetic data storage system. Those events are: during start phase the triboelectric current should reach a minimum threshold value, should not become negative, i.e. accept a flow direction opposite to the usually observed flow direction, and become 0 at the end of the start phase upon reaching operational speed. Furthermore no triboelectric current should occur during normal operation.

## Claims

1. Method for monitoring the performance of the interface of a head-slider combination and a magnetic disc, especially in a magnetic disc storage system, in which a triboelectric current upon rubbing contact between slider and disc surface is generatable, comprising the steps of measuring said triboelectric current, evaluating said triboelectric current, and said evaluation providing analysing of said triboelectric current, characterized in that said analysing provides comparing said measured triboelectric current (I) with a preset triboelectric current condition during each start phase, and generating a saving signal (TRIC) when the comparing step indicates that said measured triboelectric current is outside said preset triboelectric current conditions so that a data saving action is initiatable before data stored on said magnetic disc is finally and/or irreversibly destroyed.

2. Method according to claim 1, wherein during each start phase said triboelectric current (I) is measured and compared against a minimum threshold value (THVmin), and by said evaluation upon detection of a triboelectric current smaller than said minimum threshold value said saving signal (TRIC) is generated.

3. Method according to claim 2, wherein during each start phase said triboelectric current (I) is measured and monitored against the fact if its value diminishes toward 0 value upon reaching final disc operation speed (of e.g. 3600 rpm), and by said evaluation said saving signal (TRIC) is generated if upon reaching final disc operation speed said triboelectric current (I) is not 0.

4. Method according to claim 1, 2 or 3, wherein said triboelectric current (I) is monitored during normal disc operation, and by said evaluation said saving signal (TRIC) is generated if during normal operation said triboelectric current is not 0 or accepts even for a short moment a value different from 0.

5. Method according to one of the preceding claims, wherein during each start phase said triboelectric current (I) is measured and checked for accepting a negative value, i.e. less than 0, and by said evaluation said saving signal (TRIC) is generated if during start phase said triboelectric current is negative or at least partly accepts a negative value, respectively.

6. Device for measuring, evaluating and analysing a triboelectric current, observable to exist between the surface of a slider and the surface of a magnetic disc when they are in rubbing contact during their relative motion, especially in magnetic disc storage systems, including a measuring device (11, 13) for measuring said triboelectric current (I) and connected (7, 8, 10) to said slider (6, 18), said slider (6, 18) being suspended electrically isolated, characterized in that for preventing data losses due to head-slider disc interferences a compare means (13) is provided for comparing said measured triboelectric current against different compare values and at different events of disc operation during each start phase, said compare means (13) generating a signal (TRIC) in response to said different instances, said saving signal (TRIC) being usable for initiating a data saving procedure to prevent irreversible losses of data stored on said disc or said disc storage system, respectively.

7. Device according to claim 6, wherein one of said events is that during each start phase said triboelectric current (I) is measured and compared against a minimum threshold value (TRVmin).

8. Device according to claim 7, wherein one of said events is that during each start phase said triboelectric current (I) is measured and monitored against the fact if its value diminishes toward 0 upon reaching final and normal disc operation speed.

9. Device according to claim 6, 7 or 8, wherein one of said events is that said triboelectric current (I) is monitored during normal disc operation of being and remaining 0.

10. Device according to one of the claims 6 to 9, wherein one of said events is that during each start phase said triboelectric current (I) is measured and checked for accepting a negative value, i.e. less than 0 or flowing in a direction opposite to the usually observed direction, respectively.

## Patentansprüche

1. Verfahren zum Überwachen des Betriebs der Trennfläche einer Kopf-Flugkörperkombination und einer Magnetplatte, insbesondere in einem Magnetplattenspeichersystem, in welchem bei Reibkontakt zwischen Flugkörper und Plattenoberfläche ein triboelektrischer Strom erzeugbar ist, folgende Schritte umfassend: Messen des genannten triboelektrischen Stroms, Auswerten des genannten triboelektrischen Stroms, wobei die genannte Auswertung eine Analyse des genannten triboelektrischen Stroms vorsieht, dadurch gekennzeichnet, daß in der genannten Analyse der gemessene triboelektrische Strom (I) mit einer vorbestimmten triboelektrischen Strombedingung während jeder Startphase verglichen wird, und daß ein Sicherungssignal (TRIC) erzeugt wird, wenn der Vergleich ergibt, daß der genannte gemessene triboelektrische Strom außerhalb der vorbestimmten triboelektrischen Strombedingungen liegt, so daß ein Datensicherungsschritt einleitbar ist, bevor auf der genannten Magnetplatte gespeicherte Daten endgültig und/oder unwiderruflich vernichtet werden.

2. Verfahren nach Anspruch 1, bei welchem während jeder Startphase der genannte triboelektrische Strom (I) gemessen und mit einem Mindestschwellwert (THVmin) verglichen sowie das genannte Sicherungssignal (TRIC) erzeugt wird, wenn die genannte Auswertung ergibt, daß ein triboelektrischer Strom niedriger als der genannte Mindestschwellwert ist.

3. Verfahren nach Anspruch 2, bei welchem während jeder Startphase der genannte triboelektrische Strom (I) gemessen und daraufhin überwacht wird, ob sich sein Wert gegen den Wert 0 verringert, wenn die Platten-Endgeschwindigkeit (z.B. 3600 U/min) erreicht wird, und bei welchem durch die genannte Auswertung das genannte Sicherungssignal (TRIC) erzeugt wird, wenn bei Erreichen der Platten-Endgeschwindigkeit der genannte triboelektrische Strom (I) nicht 0 ist.

4. Verfahren nach den Ansprüchen 1, 2 oder 3, bei welchem der genannte triboelektrische Strom (I) während normalem Plattenbetrieb überwacht und durch die genannte Auswertung das genannte Sicherungssignal (TRIC) erzeugt wird, wenn während Normalbetrieb der genannte triboelektrische Strom nicht 0 ist oder auch nur für einen kurzen Augenblick einen von 0 abweichenden Wert annimmt.

5. Verfahren nach einem der vorhergehenden Ansprüche, bei welchem während jeder Startphase der genannte triboelektrische Strom (I) gemessen und auf Annehmen eines negativen Wertes überwacht wird, d.h. weniger als 0, und bei welchem durch die genannte Auswertung das genannte Sicherungssignal (TRIC) erzeugt wird, wenn während der Startphase der genannte triboelektrische Strom negativ ist bzw. zumindest teilweise einen negativen Wert annimmt.

6. Vorrichtung zum Messen, Auswerten und Analysieren eines triboelektrischen Stroms, welcher zwischen der Oberfläche einer Magnetplatte beobachtet wird, wenn sich diese während ihrer gegenseitigen Relativ-Bewegung in Reibkontakt befinden, insbesondere bei Magnetplattenspeichersystemen, einschließlich einer Messvorrichtung (11, 13) zum Messen des genannten triboelektrischen Stroms (I), welche an den Flugkörper (6, 18) angeschlossen (7, 8, 10) ist, wobei der genannte Flugkörper (6, 18) elektrisch isoliert aufgehängt ist, dadurch gekennzeichnet, daß zum Vermeiden eines Datenverlustes durch Kopf-Flugkörper-Platte-Interferenzen Vergleichsmittel (13) vorgesehen sind, um den gemessenen triboelektrischen Strom bei verschiedenen Vorgängen des Plattenbetriebs während jeder Startphase zu vergleichen, wobei die genannten Vergleichsmittel (13) ein Signal (TRIC) in Beantwortung der genannten verschiedenen Vorgänge erzeugen, und wobei das genannte Sicherungssignal (TRIC) zum Einleiten eines Datensicherungsvorgangs verwendet werden kann, um unwiderrufliche Verluste von Daten zu verhindern, welche auf der genannten Platte bzw. dem genannten Plattenspeichersystem gespeichert sind.

7. Vorrichtung nach Anspruch 6, bei welcher einer der genannten Vorgänge darin besteht, daß während jeder Startphase der genannte triboelektrische Strom (I) gemessen und mit einem Mindestschwellwert (TRVmin) verglichen wird.

8. Vorrichtung nach Anspruch 7, bei welcher einer der genannten Vorgänge darin besteht, daß während jeder Startphase der genannte triboelektrische Strom (I) gemessen und daraufhin überwacht wird, ob sich sein Wert bei Erreichen der endgültigen und normalen Plattenbetriebsgeschwindigkeit gegen 0 verringert.

9. Vorrichtung nach den Ansprüchen 6, 7 oder 8, bei welcher einer der genannten Vorgänge darin besteht, daß der genannte triboelektrische Strom (I) während normalem Plattenbetrieb daraufhin überwacht wird, ob er 0 ist und bleibt.

10. Vorrichtung nach einem der Ansprüche 6 bis 9, bei welcher einer der genannten Vorgänge darin besteht, daß während jeder Startphase der genannte triboelektrische Strom (I) gemessen und daraufhin geprüft wird, ob er einen negativen Wert annimmt, d.h. weniger als 0, bzw. ob er in eine Richtung fließt, die der üblicherweise beobachteten entgegengesetzt ist.

**Revendications**

1. Procédé pour contrôler les propriétés de l'interface entre une combinaison tête-élément de glissement et un disque magnétique, en particulier dans un système de mémoire à disques magnétiques, dans lequel un courant triboélectrique, à la suite d'un contact de frottement entre un élément de glissement et une surface d'un disque, peut être généré, comprenant les étapes consistant à mesurer ledit courant triboélectrique, évaluer ledit courant triboélectrique, et ladite évaluation fournissant une analyse dudit courant triboélectrique, caractérisé en ce que: ladite analyse fournit une comparaison dudit courant triboélectrique (I) mesuré à une condition de courant triboélectrique préétablie pendant chaque phase de démarrage, et un signal de sauvegarde (TRIC) est généré quand l'étape de comparaison indique que ledit courant triboélectrique mesuré est en dehors desdites conditions de courant triboélectrique préétablies de sorte qu'une action de sauvegarde de données mémorisées sur le disque magnétique ne soient détruites définitivement et/ou irréversiblement.

2. Procédé selon la revendication 1, dans lequel pendant chaque phase de démarrage ledit courant triboélectrique (I) est mesuré et comparé à une valeur de seuil minimum (THVmin) et dans lequel, par ladite évaluation à la suite de la détection d'un courant triboélectrqiue inférieur à ladite valeur de seuil minimum, le signal de sauvegarde (TRIC) est généré.

3. Procédé selon la revendication 2, dans lequel pendant chaque phase de démarrage ledit courant triboélectrique (I) est mesuré et contrôlé par rapport au fait de voir si sa valeur diminue vers la valeur 0 après avoir atteint la vitesse de fonctionnement du disque finale (de par exemple 3600 tours/minute), et dans lequel, par ladite évaluation, le signal de sauvegarde (TRIC) est généré si, après avoir atteint la vitesse de fonctionnement du disque finale, ledit courant triboélectrique (I) n'est pas 0.

4. Procédé selon l'une quelconque des revendications 1, 2 ou 3, dans lequel ledit courant triboélectrique (I) est contrôlé pendant le fonctionnement normal du disque, et dans lequel, par ladite évaluation, le signal de sauvegarde (TRIC) est généré si, pendant le fonctionnement normal, ledit courant triboélectrique n'est pas 0 ou prend même pendant un moment court une valeur différente de 0.

5. Procédé selon l'une quelconque des revendications précédentes, dans lequel pendant chaque phase de démarrage ledit courant triboélectrique (I) est mesuré et contrôlé pour voir s'il prend une valeur négative, c'est-à-dire inférieure à 0, et dans lequel, par ladite évaluation, le signal de sauvegarde (TRIC) est généré si pendant la phase de démarrage ledit courant triboélectrique est négatif ou prend au moins en partie une valeur négative, respectivement.

6. Dispositif pour mesurer, évaluer et analyser un courant triboélectrique que l'on peut voir exister entre la surface d'un élément de glissement et la surface d'un disque magnétique quand ils sont en contact de frottement durant leur mouvement relatif, en particulier dans des systèmes de mémoire à disques magnétiques, comprenant un dispositif de mesure (11, 13) pour mesurer ledit courant triboélectrique (I) et connecté (7, 8, 10) à l'élément de glissement (6, 18), l'élément de glissement (6, 18) étant suspendu en étant électriquement isolé, caractérisé en ce que, pour empêcher des pertes de données dues à des interférences tête-élément de glissement disque, des moyens de comparaison (13) sont prévus pour comparer ledit courant triboélectrique mesuré à différentes valeurs de comparaison et pour différents cas du fonctionnement du disque pendant chaque phase de démarrage, les moyens de comparaison (13) générant un signal (TRIC) en réponse auxdits différents cas, ledit signal de sauvegarde (TRIC) pouvant être utilisé pour commencer une procédure de sauvegarde de données pour éviter des pertes irréversibles de données mémorisées sur le disque ou dans le système de mémorisation à disques, respectivement.

7. Dispositif selon la revendication 6, dans lequel un desdits cas est celui pour lequel, pendant chaque phase de démarrage, ledit courant triboélectrique (I) est mesuré et comparé à une valeur de seuil minimum (THVmin).

8. Dispositif selon la revendication 7, dans lequel un desdits événements est celui pour lequel, pendant chaque phase de démarrage, ledit courant triboélectrique (I) est mesuré et contrôlé par rapport au fait de voir si sa valeur diminue vers 0 après avoir atteint une vitesse de fonctionnement du disque finale et normale.

9. Dispositif selon l'une quelconque des revendications 6, 7 ou 8, dans lequel un desdits événements est celui pour lequel ledit courant triboélectrique (I) est contrôlé pendant le fonctionnement du disque normal pour voir s'il est et reste à 0.

10. Dispositif selon l'une quelconque des revendications 6 à 9, dans lequel un desdits cas est celui pour lequel, pendant chaque phase de démarrage, ledit courant triboélectrique (I) est mesuré et contrôlé pour voir s'il prend une valeur négative, c'est-à-dire s'il est inférieur à 0 ou s'il s'écoule dans un sens opposé au sens habituellement observé, respectivement.

FIG. 1

FIG. 2

FIG. 3

FIG. 4

FIG. 5

FIG. 6

EP 0 248 092 B1